# EUROPÄISCHE PATENTANMELDUNG

(11) **EP 3 048 297 A1**
(43) Veröffentlichungstag der Anmeldung: **27.07.2016**
(21) Anmeldenummer: 16150036.8
(22) Anmeldetag: 04.01.2016
(51) Int. Cl.: F03D 7/02, F03D 1/06, F03D 80/40

(54) **ROTORBLATTENTEISUNGSVORRICHTUNG EINER WINDENERGIEANLAGE**

(30) Priorität: 22.01.2015 DE 102015000635
(71) Anmelder: Senvion GmbH, 22297 Hamburg (DE)
(72) Erfinder: GAWRISCH, Rüdiger, 24790 Schacht-Audorf (DE); PETERSEN, Jens, 24811 Brekendorf (DE); WARFEN, Karsten, 23795 Söhren (DE); FRIEDRICH, Hannes, 24768 Rendsburg (DE)
(74) Vertreter: Seemann & Partner

(57) **Zusammenfassung**

Die Erfindung betrifft eine Rotorblattenteisungsvorrichtung einer Windenergieanlage (1), wobei die Windenergieanlage (1) einen Rotor (10) mit wenigstens einem an einer Nabe (4) angebrachten Rotorblatt (5) aufweist, wobei die Rotorblattenteisungsvorrichtung eine Heizvorrichtung (21), einen Lüfter (22) und ein Luftleitsystem (9) aufweist, wobei das Luftleitsystem (9) einen einen ersten Luftstrom (13) in Richtung einer Rotorblattspitze (45) leitenden ersten Kanal (11) und einen einen zweiten Luftstrom (14) in Richtung der Nabe (4) leitenden zweiten Kanal (12) aufweist.

Die erfindungsgemäße Rotorblattenteisungsvorrichtung zeichnet sich dadurch aus, dass der erste Kanal (11) und der zweite Kanal (12) abschnittsweise koaxial ausgebildet sind.

## Beschreibung

Die Erfindung betrifft eine Rotorblattenteisungsvorrichtung einer Windenergieanlage und eine entsprechende Windenergieanlage.

Rotorblattenteisungsvorrichtungen von Windenergieanlagen sind grundsätzlich bekannt. Es wird beispielsweise auf die EP 2 585 713 B1 der Anmelderin verwiesen.

Grundsätzlich ist es möglich, zur Rotorblattenteisung warme Luft in den Bereich des Rotorblattes zu leiten, an dem eine verstärkte Eisbildung vorliegt oder zu erwarten ist. Hierzu werden üblicherweise entsprechende Heizvorrichtungen in ein Rotorblatt eingebracht. Um die Heizvorrichtungen zu betreiben, ist es notwendig, elektrische Verbindungen für die Energieversorgung und auch für eine Leistungsregelung bzw. eine Steuerung einzubringen.

Es ist Aufgabe der vorliegenden Erfindung, eine verbesserte Rotor-blattenteisungsvorrichtung zur Verfügung zu stellen, die eine zuverlässige und effiziente Enteisung von Rotorblättern ermöglicht.

Gelöst wird diese Aufgabe durch eine Rotorblattenteisungsvorrichtung einer Windenergieanlage, wobei die Windenergieanlage einen Rotor mit wenigstens einem an einer Nabe angebrachten Rotorblatt aufweist, wobei die Rotorblattenteisungsvorrichtung eine Heizvorrichtung, einen Lüfter und ein Luftleitsystem aufweist, wobei das Luftleitsystem einen einen ersten Luftstrom in Richtung einer Rotor-blattspitze leitenden ersten Kanal und einen einen zweiten Luftstrom in Richtung der Nabe leitenden zweiten Kanal aufweist, die dadurch weitergebildet ist, dass der erste Kanal und der zweite Kanal abschnittsweise koaxial ausgebildet sind.

Durch die erfindungsgemäße Rotorblattenteisungsvorrichtung ist es möglich, Komponenten der Rotorblattenteisungsvorrichtung, die vorher dem Rotorblatt zugeordnet waren, also sich beispielsweise mit dem Rotorblatt mitbewegt haben, da relativ zur Nabe die Rotor-blätter typischerweise im Hinblick auf deren Einstellwinkel zum Wind verdreht werden, nun einer anderen Komponente der Windenergieanlage zuzuordnen, wie beispielsweise der Rotorblattnabe bzw. Nabe. Hierdurch kann vermieden werden, dass elektrische Kontakte über beispielsweise Schleifkontakte vorgenommen werden müssen, die sehr verschleißanfällig sind.

Vorzugsweise dient die Heizvorrichtung dazu, den ersten Luftstrom zu erwärmen, wobei insbesondere der Lüfter dafür sorgt, dass der erste Luftstrom erzeugt wird und durch die Heizvorrichtung zum Aufwärmen des ersten Luftstromes leitet. Der erwärmte Luftstrom gelangt dann in Richtung der Rotorblattspitze und wird an Stellen des Rotorblattes geleitet, die zu enteisen sind. Hierbei kühlt sich der Luftstrom ab und gelangt als zweiter Luftstrom, der als abgekühlter Luftstrom bezeichnet werden kann, zurück in Richtung Rotorblattwurzel und wieder zurück zum Lüfter, um erneut in den Kreislauf geführt zu werden.

Beim Erwärmen des ersten Luftstromes wird dieser auf eine Temperatur erwärmt, die oberhalb von 0°C liegt. Bevorzugt wird der erste Luftstrom auf bis zu 75°C erwärmt. Je nach Außenbedingungen kühlt die Luft bei dem Durchströmen durch das Rotorblatt auf Temperaturen ab, die im Bereich zwischen 0°C und 50°C liegen.

Vorzugsweise bilden der erste Kanal und der zweite Kanal abschnittsweise ein konzentrisches Doppelrohr. Ferner vorzugsweise sind ein Teil der Rotorblattenteisungsvorrichtung, insbesondere der Lüfter und/oder die Heizvorrichtung, ortsfest mit der Nabe verbunden.

Eine besonders effiziente Rotorblattenteisungsvorrichtung ist dann gegeben, wenn ein erster Teil der koaxial ausgebildeten Kanäle ortsfest mit der Nabe ausgebildet ist und ein zweiter Teil der koaxial ausgebildeten Kanäle ortsfest mit dem Rotorblatt ausgebildet ist, wobei zur Verbindung des ersten Teils und des zweiten Teils der koaxial ausgebildeten Kanäle eine Drehdurchführung vorgesehen ist, die insbesondere in einem Schott des Rotorblatts angeordnet ist.

Bei einer derartigen Ausgestaltung der erfindungsgemäßen Rotorblattenteisungsvorrichtung kann ohne viel Wärmeverlust das entsprechende Rotorblatt enteist werden. Vorzugsweise entspricht die Drehachse der Drehdurchführung einer Drehachse des Rotorblatts. In diesem Fall geht die Drehachse durch das Zentrum der koaxial ausgebildeten Kanäle. Hierdurch ist eine besonders stabile Verbindung möglich.

Vorzugsweise sind der erste und der zweite Kanal über die Drehdurchführung hinausgehend koaxial ausgebildet.

Vorzugsweise weist der Lüfter eine Rotationsachse auf, die parallel zu einer Rotationsachse des Rotors ist. Wenn der Lüfter derart ausgerichtet ist, ist dieser nur wenigen Belastungen ausgesetzt und hat eine deutlich längere Lebensdauer. In dem anderen Fall, wenn die Drehachse des Lüfters nicht parallel zu einer Rotationsachse des Rotors angeordnet ist, werden die Lager des Lüfters erheblich belastet, was zu einem erhöhten Verschleiß führt.

Vorzugsweise ist der Teil der Rotorblattenteisungsvorrichtung, der ortsfest mit der Nabe verbunden ist, schwingungsentkoppelt oder schwingungsgedämpft mit der Nabe verbunden. Zumindest einige Komponenten des Teils der Rotorblattenteisungsvorrichtung, die ortsfest mit der Nabe verbunden sind, sollten entsprechend schwingungsentkoppelt oder schwingungsgedämpft sein. Insbesondere der Lüfter und/oder die Heizvorrichtung sind vorzugsweise schwingungsentkoppelt oder schwingungsgedämpft mit der Nabe verbunden.

Vorzugsweise ist ein im Wesentlichen geschlossenes Luftleitsystem vorgesehen. Das Luftleitsystem sorgt dafür, dass die im System befindliche Luft in Form des ersten und des zweiten Luftstroms im Kreis geführt wird, so dass insbesondere abgekühlte, aber noch etwas erwärmte rückgeführte Luft wieder erwärmt wird, wodurch weniger Heizleistung benötigt wird. Die noch etwas erwärmte rückgeführte Luft ist vorzugsweise wärmer als die Umgebungsluft des Rotorblattes.

Das Luftleitsystem weist ein möglichst geringes Volumen auf, um so auch die Heizleistung möglichst klein zu halten. Hierzu ist vorzugsweise vorgesehen, gezielt diejenigen Bereiche des Rotorblattes aufzuheizen, die stärker eisgefährdet und/oder aerodynamisch für den Anlagenbetrieb von erhöhter Relevanz sind. Es handelt sich hierbei insbesondere um den Nasenbereich oder die Blattvorderkante der äußeren Hälfte bzw. des äußeren Drittels des Rotorblatts zur Rotorblattspitze hin. Zudem ist vorzugsweise vorgesehen, zumindest die Warmluftzuführung oder einen Teil der Warmluftzuführung isolierend auszubilden.

Vorzugsweise ist auf einer Druckseite des Lüfters eine oder mehrere, insbesondere im Hinblick auf die Größe vorgebbare, Öffnung oder Öffnungen zur, insbesondere kontinuierlichen, Abfuhr von Luft aus der Rotorblattenteisungsvorrichtung vorgesehen. Vorzugsweise ist wenigstens eine Öffnung zwischen dem Lüfter und der Heizvorrichtung vorgesehen. Damit hat die an die Umgebung abgegebene Luft maximal eine Rücklauftemperatur.
Durch diese Maßnahme wird ein Teil der Luft inklusive etwaiger enthaltener Ausgasungen, Luftfeuchtigkeit und eventuelle Stäube aus dem Rotorblatt oder aus dem Kreislauf ausgeblasen. Hierdurch findet zum einen eine Druckabsenkung im Luftkreislauf statt, zum anderen wird verhindert, dass sich Eis innerhalb des Rotorblattes absetzen kann, beispielsweise bei der Drehdurchführung.

Vorzugsweise wird die vorherige Maßnahme dadurch ergänzt, dass in einem Saugbereich des Luftleitsystems in einem Rotorblattinnenraum eine oder mehrere Öffnungen vorgesehen sind, um Luft aus dem Rotorblattinnenraum in das Luftleitsystem einzubringen. Hierdurch wird eine kontinuierliche Spülung wenigstens von Teilen des Rotorblattinnenraums und/oder des Enteisungssystems ermöglicht.

Vorzugsweise ist oder sind in einem Schott des Rotorblattes eine Öffnung oder mehrere Öffnungen vorgesehen, durch die Frischluft, insbesondere über die Nabe, in den Rotorblattinnenraum einbringbar ist. Vorzugsweise ist ein entsprechender Filter vorgesehen, um die Frischluft vor dem Einbringen in das Rotorblatt zu filtern. Die vorgesehenen Öffnungen können teilweise oder auch alle vorzugsweise verschließbar sein und/oder in deren Durchmesser einstellbar sein. Durch das Vorsehen einer weiteren Öffnung in einem Schott des Rotorblattes und das Einführen von Frischluft kann die Konzentration von gesundheitsschädlichen Gasen im Blattinnenraum stetig verringert werden. Unter Frischluft wird im Rahmen der Erfindung Luft verstanden, die von außerhalb des Rotorblattes, vorzugsweise von außerhalb der Windenergieanlage, in das Rotorblatt eingeleitet wird oder einströmt.

Die Rotorblattenteisungsvorrichtung kann über spezielle Anordnungen der Öffnungen oder Größen der Öffnungen auch als Unterdrucksystem oder teilweise als Unterdrucksystem gefahren werden, um eine gezielte Drucksteuerung und Luftwegsteuerung vorzusehen. Vorzugsweise sind die Öffnungen bzw. zumindest ist die Öffnung auf der Druckseite des Lüfters über einen reduzierten Querschnitt als dauerhafte passive Öffnung vorgesehen, so dass eine dauerhafte Spülung der Innenluft des Rotorblattes bzw. des Rotor-blattinnenraumes ermöglicht ist. Ein Unterdrucksystem hat den Vorteil, dass bei undichten Stellen keine erwärmte Luft austritt, so dass eine energieeffiziente Enteisung ermöglicht ist.

Alternativ kann die Rotorblattenteisungsvorrichtung als Überdrucksystem betrieben werden.

Vorzugsweise ist ein erster Luftfilter in dem ersten Kanal und/oder ein zweiter Luftfilter in dem zweiten Kanal vorgesehen. Hierdurch wird verhindert, dass sich Staubpartikel im Inneren des Rotorblattes, die während der Herstellung des Rotorblattes oder im Betrieb entstanden sind oder vielleicht noch entstehen, auf Heizstäben der Heizvorrichtung ablagern, wodurch eine Brandgefahr oder Verpuffungsgefahr beim Einschalten der Heizvorrichtung vermieden wird. Die Heizvorrichtung ist vorzugsweise ein Heizregister.

Zudem können die jeweiligen Filter mit einem Grobfilterteil für grobe Teile mit mehr Masse und einer mechanischen Fangeinrichtung für Grobteile und einem Feinfilter für Staubpartikel in Reihe geschaltet sein, um eine effiziente Filterung zu ermöglichen. Zudem kann eine Reinigungsöffnung vorgesehen sein, die vorzugsweise verschließbar ist, um die Filter effizient zu reinigen.

Die Aufgabe wird ferner durch eine Rotorblattenteisungsvorrichtung einer Windenergieanlage gelöst, wobei die Windenergieanlage einen Rotor mit wenigstens einem an einer Nabe angebrachten Rotorblatt aufweist, wobei die Rotorblattenteisungsvorrichtung eine Heizvorrichtung, einen Lüfter und eine Luftleitsystemkopplungseinheit aufweist, wobei die Luftleitsystemkopplungseinheit ausgestaltet ist, mit einem Luftleitsystem verbunden zu werden, wobei das Luftleitsystem einen einen ersten Luftstrom in Richtung einer Rotor-blattspitze leitenden ersten Kanal und einen einen zweiten Luftstrom in Richtung der Nabe leitenden zweiten Kanal aufweist, wobei der erste Kanal und der zweite Kanal abschnittsweise koaxial ausgebildet sind oder sein können. Die Luftleitsystemkopplungseinheit weist vorzugsweise eine Drehdurchführung auf, in dessen Bereich der erste und der zweite Kanal koaxial zueinander ausgebildet sind.

Vorzugsweise ist eine Windenergieanlage mit einer Rotorblattenteisungsvorrichtung versehen, die vorstehend beschrieben ist.

Die Erfindung wird ferner gelöst durch ein Verfahren zum Betreiben einer Rotorblattenteisungsvorrichtung einer Windenergieanlage, wobei die Windenergieanlage einen Rotor mit wenigstens einem an einer Nabe angebrachten Rotorblatt aufweist, mit den Schritten: Erwärmen von Luft durch eine Heizvorrichtung und Einleiten der erwärmten Luft mittels eines Lüfters in ein Luftleitsystem, das einen einen ersten Luftstrom in Richtung einer Rotorblattspitze leitenden ersten Kanal und einen einen zweiten Luftstrom in Richtung der Nabe leitenden zweiten Kanal aufweist, wobei der erste Kanal und der zweite Kanal abschnittsweise koaxial ausgebildet sind.

Vorzugsweise weist der erste Luftstrom erwärmte Luft auf und/oder der zweite Luftstrom abgekühlte Luft auf.

Um an Rotorblättern anhaftendes Eis abzutauen bzw. abwerfen zu können, werden die zu enteisenden Oberflächen der Rotorblätter auf mehr als 0° C erwärmt. Die hierfür notwendige Wärmeenergie und der erforderliche Luftstrom werden von je einer Rotorblattenteisungsvorrichtung, die vorstehend beschrieben ist, je Rotorblatt zur Verfügung gestellt. Hierbei sind eine Heizvorrichtung und ein Lüfter vorzugsweise in Form einer Lüfter-Heizeinheit vorgesehen, die innerhalb einer Blattwurzel des Rotorblattes angeordnet ist und an der Rotornabe befestigt ist.

Die Lüfter-Heizeinheit umfasst vorzugsweise einen Lüfter, eine Heizvorrichtung, beispielsweise ein Heizregister, und ein konzentrisches Doppelrohr in Form eines ersten und eines zweiten Kanals für den Vorlauf und den Rücklauf der Luft in dem Luftleitsystem. Zu dem konzentrischen Doppelrohr existiert vorzugsweise ein Gegenstück, das mit dem Rotorblatt bei der Pitchverstellung mitdreht. Das Gegenstück des Rotorblatts und das konzentrische Doppelrohr der Lüfter-Heizeinheit sind vorzugsweise über eine Drehdurchführung miteinander verbunden.

Über eine Steuerung und Regelung, die vorzugsweise extern zu der Lüfter-Heizeinheit vorgesehen ist, werden die Heizvorrichtung und der Lüfter angesteuert und vorzugsweise auch überwacht. Das Luftleitsystem bzw. das Lüftungssystem ist je Rotorblatt vom Grundprinzip her ein geschlossenes System, wobei es allerdings auch vorgesehen sein kann, geringe Luftmengen auszutauschen bzw. zu erneuern. Auf diese Weise bleibt die Restwärme im Rücklauf bei der Rotorblattenteisung im Wesentlichen erhalten.

Das im Kreis geführte Luftvolumen in dem Luftleitsystem ist vorzugsweise 6 m³ bis 20 m³. Besonders bevorzugt ist ein Volumen von 8 m³ bis 12 m³. In einem Ausführungsbeispiel der Rotorblattenteisungsvorrichtung wird im Kreis zwischen 800 m³/h und 2000 m³/h Luft gefördert. Es kommt vorzugsweise ca. 20 m³/h bis 100 m³/h frische Luft oder Frischluft hinzu. Jedoch ist die Erfindung nicht auf diese Bereiche beschränkt. Die angegebenen Bereiche stellen bevorzugte Ausführungsformen dar.

Das Verhältnis von im Kreis geförderter Luft zu frischer hinzugefügter Luft oder Frischluft ist vorzugsweise zwischen 20 und 40, besonders bevorzugt bei 25 bis 30. Frischluft wird vorzugsweise mittelbar über das Luftvolumen des Rotorblatts und das Zuführen der Luft aus dem Rotorblatt in die im Kreis geförderte Luft in einem Bereich eingespeist, in dem der zweite Luftstrom strömt.

Aufgrund der festen Installation der Heizvorrichtung und auch des Lüfters bzw. der Lüfter-Heizeinheit an der Nabe muss die elektrische Energieversorgung nicht in den rotierenden Teil des Rotorblattes geführt werden, zudem kann hierdurch für die elektrische Energieversorgung und auch die Steuervorrichtung ein ausreichender Blitzschutz sichergestellt werden.

Durch das konzentrische Doppelrohr, das vorzugsweise in der Drehachse des Rotorblattes positioniert ist, wird die warme Zuluft über ein passendes Gegenstück in das Kanalsystem bzw. das Luftleitsystem des Rotorblattes eingeblasen und der abgekühlte Rücklauf wird wieder zur Ansaugseite des Lüfters geführt. Durch diesen Kreislauf kann die zur Verfügung stehende Heiz- und Lüfterleistung effizient genutzt werden.

Die Komponenten der Luftführung bzw. des Luftleitsystems sind vorzugsweise teilweise thermisch isoliert ausgeführt. Zudem kann im Luftkreislauf, d.h. im Luftleitsystem auch wenigstens eine weitere Komponente eingebracht sein, die beispielsweise eine Umkehr der definierten Luftströmung mechanisch verhindert. Hierbei kann es sich um eine Rückschlagklappe oder ein Rückschlagventil handeln.

Vorzugsweise oder alternativ wird die vordere Blattkammer als Rücklaufleitung zur Vereinfachung des Luftführungssystems verwendet. Hierdurch kann Material eingespart werden. Gleichwohl ist für diesen Fall das durchströmte Luftvolumen größer. Gleichwohl sind die Druckverluste im Kreislaufsystem bzw. im Luftleitsystem reduziert, wodurch der Volumenstrom zunimmt und die Rücklauftemperatur steigt, und zwar bei gleichbleibender Vorlauftemperatur. Dieses kann die Wärmeübergangsverhältnisse verbessern.

Alternativ zu üblichen Rotorblattmaterialien bzw. ergänzend hierzu kann in den Zonen, in denen enteist werden soll, ein Material verwendet werden, das eine höhere Temperaturleitfähigkeit aufweist als das übliche Rotorblattmaterial, wie beispielsweise glasfaserverstärkter Kunststoff, um den Wärmedurchgang zur Blattvorderkante zu erhöhen. Hierzu kann beispielsweise ein graphithaltiges Fasermaterial oder Kohlefaser verwendet werden. Alternativ oder zusätzlich kann auch der glasfaserverstärkte Kunststoff durch die Zugabe von Ruß oder von keramischen Füllstoffen in der Polymermatrix in seiner Temperaturleitfähigkeit verbessert werden. Letzteres weist den Vorteil auf, dass das Blattmaterial elektrisch nichtleitend bleibt.

Vorzugsweise ist wenigstens der Lüfter und/oder die Heizvorrichtung schwingungsentkoppelt oder schwingungsgedämpft an der Nabe befestigt. Hierdurch werden Vibrationen und Verformungen der Nabe nicht oder nur unwesentlich auf wenigstens den Lüfter und/oder die Heizvorrichtung übertragen und Vibrationen des Lüfters werden vorzugsweise nicht auf die Nabe übertragen. Hierdurch erhöht sich die Lebensdauer der Komponenten der Rotorblattenteisungsvorrichtung und auch von weiteren Komponenten der Windenergieanlage. Vorzugsweise dienen Elastomerpuffer zur Schwingungsentkopplung.

Vorzugsweise oder alternativ dient eine einzige Heizvorrichtung und ein einziger Lüfter dazu, alle Rotorblätter einer Windenergieanlage zu enteisen. Hierdurch werden Komponenten und Platz eingespart.

Alternativ können mehrere Heizeinrichtungen und mehrere Lüfter vorgesehen sein, die an verschiedenen Nabenseiten angeordnet sind, um eine Ausfallsicherheit zu ermöglichen.

Vorzugsweise oder alternativ sind die Luftleitsysteme der Rotorblätter hydraulisch in einer Reihe geschaltet, um mittels eines einzigen Lüfters und einer einzigen Heizvorrichtung alle Rotorblätter enteisen zu können. Um eine hydraulische Reihenschaltung der Luftleitsysteme der Rotorblätter zur Nutzung eines Lüfters und einer Heizvorrichtung zum Enteisen vorzusehen, kann vorgesehen sein, das ein zweiter Kanal einer ersten Rotorblattenteisungsvorrichtung, das zu einem ersten Rotorblatt zugeordnet ist, mit dem ersten Kanal eines zweiten Rotorblattes verbunden ist, wobei dann zusätzlich der zweite Kanal des zweiten Rotorblattes mit dem ersten Kanals eines dritten Rotorblattes verbunden ist und der zweite Kanal des dritten Rotorblattes mit dem ersten Kanal des ersten Rotorblattes verbunden ist. Hierdurch werden bei einem dreirotorblättrigen Rotor alle Rotorblätter entsprechend enteist.

Zudem kann vorgesehen sein, die aus dem zweiten Luftstrom kommende abgekühlte Luft zur Vorerwärmung in ein weiteres Rotorblatt in den ersten Kanal einströmen zu lassen und anschließend in dem ersten Kanal des weiteren Rotorblattes das erfindungsgemäße Verfahren zum Betreiben einer Rotorblattenteisungsvorrichtung durchzuführen. Diese Luftstromführung kann auch permutierend erfolgen. Es kann auch vorgesehen sein, die aus dem zweiten Luftstrom kommende abgekühlte Luft zur Nacherwärmung eines vorher schon beheizten Rotorblattes in den ersten Kanal einströmen zu lassen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen. Die vorstehenden und/oder die nachstehenden bevorzugten Ausführungsformen können mit den vorstehend erläuterten erfindungsgemäßen Lösungen vorteilhaft kombiniert werden.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer Windenergieanlage,
- Fig. 2: eine schematische Darstellung eines Rotorblattes an einer Nabe,
- Fig. 3: eine schematische Darstellung der erfindungsgemäßen Rotorblattenteisungsvorrichtung,
- Fig. 4: eine schematische Darstellung eines Teils der erfindungsgemäßen Rotorblattenteisungsvorrichtung in dreidimensionaler Darstellung,
- Fig. 5: eine schematische Darstellung eines Teils der erfindungsgemäßen Rotorblattenteisungsvorrichtung in einem schematisch angedeuteten Teil eines Rotorblattes.

In den Zeichnungen sind jeweils gleiche oder gleichartige Elemente und/oder Teile mit denselben Bezugsziffern versehen, so dass von einer erneuten Vorstellung jeweils abgesehen wird.

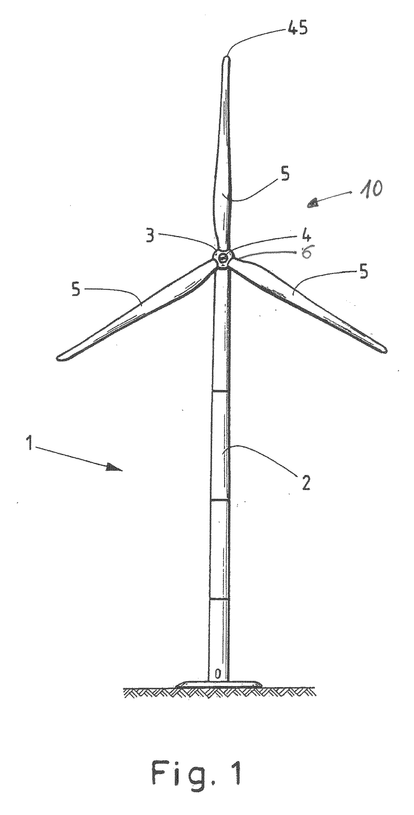

Fig. 1 zeigt schematisch eine Windenergieanlage 1. Die Windenergieanlage 1 umfasst einen Turm 2, auf der eine Gondel 3 vorgesehen ist. An einer Nabe 4 sind drei Rotorblätter 5 angeordnet. Es handelt sich um eine Windenergieanlage des Horizontalachsentyps. Die horizontale Achse stellt auch gleichzeitig die Rotationsachse des aus der Nabe 4 und den Rotorblättern 5 sich bildenden Rotors 10 der Windenergieanlage 1 dar. In der Fig. 1 zeigt die Rotationsachse aus der Zeichenebene im Wesentlichen senkrecht heraus.

Jedes Rotorblatt 5 erstreckt sich von einer Rotorblattwurzel 6, die an der Nabe 4 angeordnet ist zu einer Rotorblattspitze 45.

Bei Windkraftanlagen 1, die in kalten Regionen mit vereisungsbildender Atmosphäre aufgestellt sind, kommt es häufig zu Eisanlagerungen am Rotorblatt, und zwar so stark, dass sich die Leistung der Anlage erheblich reduziert, was im Extremfall zur Abschaltung der Anlage führen kann. Um den Betrieb der Windenergieanlage zu gewährleisten ist vorgesehen, die Rotorblätter 5 durch entsprechende Maßnahmen zu enteisen.

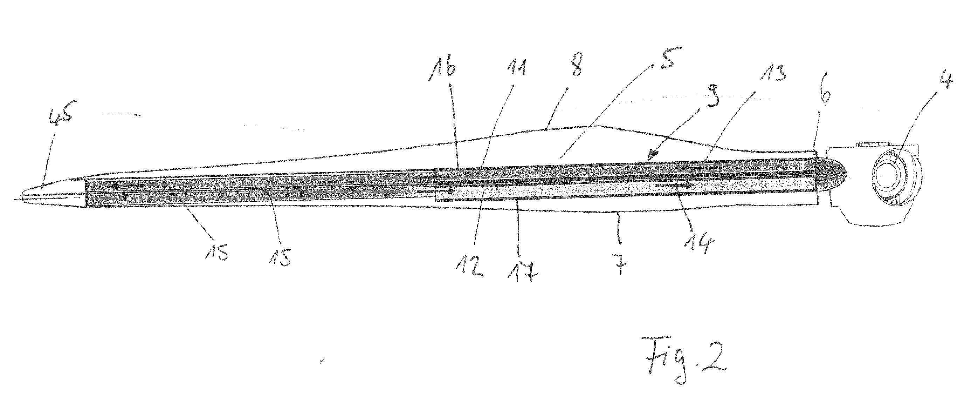

Hierzu wird eine Rotorblattenteisungsvorrichtung einer Windenergieanlage 1 vorgeschlagen, die, wie schematisch in Fig. 2 angedeutet ist, in einem Luftleitsystem 9 Luft im Wesentlichen in einem Kreislauf führt, die in der Nähe der Nabe 4 bzw. in der Nähe oder in der Rotorblattwurzel 6 erwärmt wird und zur Rotorblattspitze 45 in einem ersten Kanal 11 geleitet wird. Im Spitzenbereich des Rotorblattes 5 gelangt die warme Luft in einen zweiten Kanal 12, der in der Nähe der Blattvorderkante 7 angeordnet ist. Der erste Kanal 11 ist mehr zur Hinterkante 8 des Rotorblattes 5 angeordnet.

Um die Wärmeenergie an die Stellen zu leiten, bei der die Vereisung am wahrscheinlichsten ist bzw. am stärksten, wird der erste Kanal 11 mit einer Isolierung 16 versehen, um dem Warmluftstrom 13 mit möglichst wenig Wärmeverlusten in Richtung Rotorblattspitze 45 zu leiten. Im Bereich der Rotorblattspitze 45 wird vorzugsweise über Querströmungen 15 der Warmluftstrom 13 in Richtung Rotorblattvorderkante 7 geleitet, um die Blattvorderkante, die am meisten zur Vereisung neigt, und zwar insbesondere der Teil der Rotorblattvorderkante, der zur Rotorblattspitze 45 angeordnet ist. Hierdurch wird Eis entsprechend angetaut und kann abfallen. Die etwas abgekühlte Luft wird als abgekühlter Luftstrom 14 wieder zu der in Fig. 2 nicht dargestellten Heizung gefördert. Auf dem Weg dorthin ist der zweite Kanal 12 mit einer Isolierung 17 versehen, um die Restwärme in dem abgekühlten Luftstrom nicht an Stellen zu verlieren, wo diese nicht abgegeben werden muss.

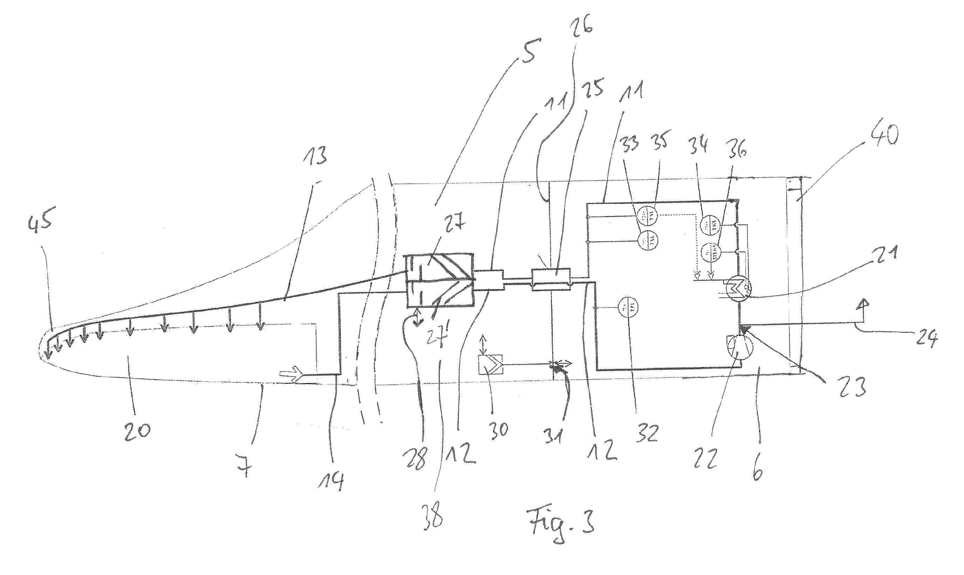

Fig. 3 zeigt schematisch eine erfindungsgemäße Rotorblattenteisungsvorrichtung einer Windenergieanlage 1. Das Rotorblatt 5 ist an der Nabe 4, die nur angedeutet ist, angebracht. Ferner ist mit der Nabe ortsfest verbunden eine Heizvorrichtung 21, die als Heizregister ausgestaltet sein kann und der Lüfter 22.

Mittels der Heizvorrichtung 21 und dem Lüfter 22 wird warme Luft durch den ersten Kanal 11 über die Drehdurchführung 25 in Richtung der Rotorblattspitze 45 geleitet. Die warme Luft wird über einen Filter 27 gefiltert in Richtung der Rotorblattspitze 45 weitergeleitet. Ein entsprechender Warmluftstrom 13 ist hier schematisch angedeutet. Die Pfeile sollen die Warmluftströme darstellen, die in eine Blattheizkammer 20, die an der Rotorblattnase im Bereich der Rotorblattspitze 45 angeordnet ist, geleitet werden.

Abgekühlte Luft 14 bzw. ein abgekühlter Luftstrom 14 gelangt zurück über einen Luftfilter 27' und den zweiten Kanal 12 über die Drehdurchführung 25 in Richtung des Lüfters 22.

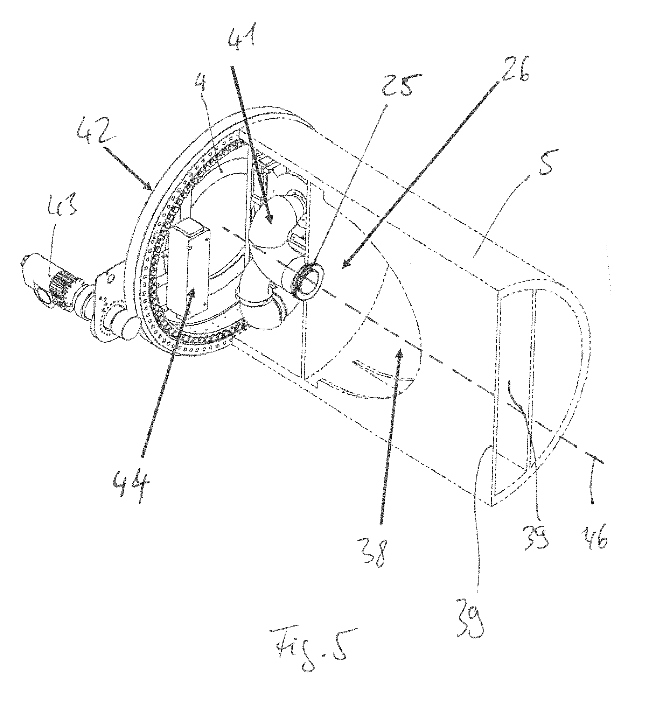

Um die Luftmengen bzw. die Wärmemenge entsprechend zu steuern oder zu regeln, sind mehrere Temperaturfühler vorgesehen. Beispielsweise der Temperaturfühler 32, der die Temperatur der zurückgeführten Luft misst sowie die Temperaturfühler 33 und 34. Der Temperaturfühler 34 misst die Heizvorrichtungstemperatur bzw. die Heizregistertemperatur und der Temperaturfühler 33 misst die Vorlauftemperatur. Die Messwerte der Sensoren 32, 33 und 34 werden einem nicht dargestellten Steuergerät 44 (siehe Fig. 5) zur Verfügung gestellt, um die Heizvorrichtung 21 und den Lüfter 22 zu steuern bzw. zu regeln.

Als Sicherheitsmaßnahme ist zudem ein Temperaturfühler 35 vorgesehen, der bei beispielsweise einer zu hohen Vorlauftemperatur unmittelbar die Heizvorrichtung 21 ausschalten kann. Entsprechend kann noch über den Temperaturfühler 36, mittels der die Heizvorrichtungstemperatur gemessen wird, die Heizvorrichtung abgeschaltet werden.

Es ist zudem auf der Druckseite des Lüfters 22 eine kleine Öffnung 23 vorgesehen, über die ein kleiner Volumenstrom der im Kreis geführten Luft über eine Spülluftleitung 24 abgeführt werden kann. Zudem kann eine Öffnung 28 an der Saugseite des Luftleitsystems 9 bzw. eingangsseitig des Filters 27' vorgesehen sein, um Luft aus dem Rotorblattinneren abzusaugen und somit ein Entfernen von Gasen aus dem Rotorblattinnenraum zu ermöglichen.

Das System kann beispielsweise insgesamt auf Unterdruck gefahren werden.

Zudem kann in dem Schott 26, in dem die Drehdurchführung 25 angeordnet ist, eine Öffnung 31 vorgesehen sein, mittels der Frischluft, die beispielsweise über die Nabe 40 in das Rotorblattinnere gelangt, über einen Filter 30 gefiltert in den Rotorblattinnenraum in Fig. 3 links von dem Schott 26 gelangt. Hierdurch ist eine permanente Spülung gewährleistet.

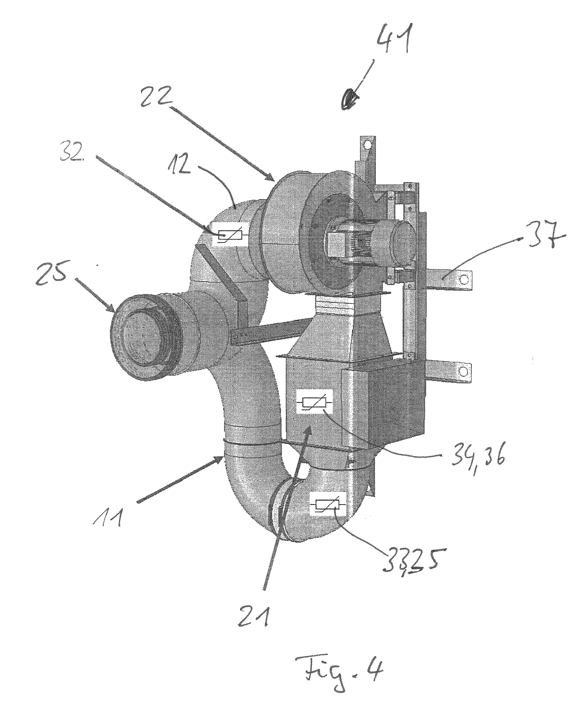

Fig. 4 zeigt einen Teil der erfindungsgemäßen Rotorblattenteisungsvorrichtung in einer schematischen dreidimensionalen Darstellung. Es ist hier an sich eine Lüfter-Heizungseinheit dargestellt. Der Lüfter 22 wird mit einem entsprechend dargestellten Motor angetrieben und fördert Luft von dem zweiten Kanal 12 zur Heizvorrichtung 21 in den ersten Kanal 11. Der erste Kanal 11 ist der innere Kanal der koaxialen Kanäle bei der Drehdurchführung 25. Der zweite Kanal 12 ist der außenliegende Kanal bei der Drehdurchführung 25. In Fig. 4 ist zudem gezeigt, dass die Lüfter-Heizvorrichtungseinheit über eine Haltung 37 gehalten wird. Die Halterung 37 ist an einer nicht dargestellten Nabe befestigt und somit ist der Lüfter 22 und die Heizvorrichtung 21 ortsfest mit der Nabe realisiert.

Zudem sind entsprechende Temperaturfühler 32, 33, 34, 35 und 36 angedeutet. Die Funktion dieser Temperaturfühler wurde schon im Bezug zur Fig. 3 besprochen.

Fig. 5 zeigt schematisch die Lüfter-Heizungseinheit 41 in schematischer Darstellung in einem angedeuteten Rotorblatt 5. Die Lüfter-Heizungseinheit 41 ist an der Nabe 4 befestigt. Es ist schematisch auch aufgebrochen und strichpunktiert ein Teil eines Rotorblattes 5 umfassend eine äußere Schale und zwei Stege 39 dargestellt. Zudem ist der Rotorblattinnenraum 38 dargestellt. Die Drehdurchführung 25 ist in dem Schott 26 eingebracht.

Es ist zudem eine Steuervorrichtung 44 zur Steuerung der Komponenten der erfindungsgemäßen Rotorblattenteisungsvorrichtung dargestellt. Die Steuerungsvorrichtung 44 kann auch dazu dienen, die Rotorblattenteisungsvorrichtungen weiterer Rotorblätter zu steuern bzw. zu regeln.

Schließlich ist der Anschluss des Rotorblattes 5 an die Nabe 4 dargestellt. Es ist ein Rotorlager 42 gezeigt, wobei es mit dem Stellantrieb 43 möglich ist, das Rotorblatt 5 in dessen Anstellwinkel zum Wind einzustellen, und zwar über eine Drehachse 46. Da die Lüfter-Heizungseinheit 41 und damit der Lüfter 22 und die Heizvorrichtung 21 ortsfest mit der Nabe 4 verbunden sind und gleichzeitig eine Pitchverstellung des Rotorblattes 5 möglich ist, ist eine Drehdurchführung 25 im Bereich des Schotts 26 vorgesehen, da die Lüfter-Heizungseinheit 41 mit der Nabe ortsfest bleibt, während das Rotorblatt 5 mit dem Schott 26 und den weiteren in dem Rotorblatt 5 angeordneten Leitungen und möglichen Filtern, die zur Rotorblattspitze führen, sich mit dem Rotorblatt 5 mitdrehen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezu^{q}szeichen liste

- 1: Windenergieanlage
- 2: Turm
- 3: Gondel
- 4: Nabe
- 5: Rotorblatt
- 6: Rotorblattwurzel
- 7: Blattvorderkante
- 8: Blatthinterkante
- 9: Luftleitsystem
- 10: Rotor
- 11: erster Kanal
- 12: zweiter Kanal
- 13: erster Luftstrom
- 14: zweiter Luftstrom
- 15: Querströmung
- 16: Isolierung
- 17: Isolierung
- 20: Blattheizkammer
- 21: Heizvorrichtung
- 22: Lüfter
- 23: Öffnung Druckseite
- 24: Spülluftleitung
- 25: Drehdurchführung
- 26: Schott
- 27, 27': Filter
- 28: Öffnung Saugseite
- 30: Filter
- 31: Öffnung Blattschott
- 32: Temperaturfühler
- 33: Temperaturfühler
- 34: Temperaturfühler
- 35: Temperaturfühler mit Hardwareabschaltung
- 36: Temperaturfühler mit Hardwareabschaltung
- 37: Halterung
- 38: Rotorblattinnenraum
- 39: Steg
- 40: Nabenanschluss
- 41: Lüfter-Heizungseinheit
- 42: Rotorlager
- 43: Stellantrieb
- 44: Steuervorrichtung
- 45: Rotorblattspitze
- 46: Drehachse

## Patentansprüche

1. Rotorblattenteisungsvorrichtung einer Windenergieanlage (1), wobei die Windenergieanlage (1) einen Rotor (10) mit wenigstens einem an einer Nabe (4) angebrachten Rotorblatt (5) aufweist, wobei die Rotorblattenteisungsvorrichtung eine Heizvorrichtung (21), einen Lüfter (22) und ein Luftleitsystem (9) aufweist, wobei das Luftleitsystem (9) einen einen ersten Luftstrom (13) in Richtung einer Rotorblattspitze (45) leitenden ersten Kanal (11) und einen einen zweiten Luftstrom (14) in Richtung der Nabe (4) leitenden zweiten Kanal (12) aufweist, **dadurch gekennzeichnet, dass** der erste Kanal (11) und der zweite Kanal (12) abschnittsweise koaxial ausgebildet sind.

2. Rotorblattenteisungsvorrichtung nach Anspruch 1, **dadurch gekennzeichnet, dass** ein Teil der Rotorblattenteisungsvorrichtung, insbesondere der Lüfter (22) und/oder die Heizvorrichtung (21), ortsfest mit der Nabe (4) verbunden ist.

3. Rotorblattenteisungsvorrichtung nach Anspruch 1 oder 2, **dadurch gekennzeichnet, dass** ein erster Teil der koaxial ausgebildeten Kanäle (11, 12) ortsfest mit der Nabe (4) ausgebildet ist und ein zweiter Teil der koaxial ausgebildeten Kanäle (11, 12) ortsfest mit dem Rotorblatt (5) ausgebildet ist, wobei zur Verbindung des ersten Teils und des zweiten Teils der koaxial ausgebildeten Kanäle (11, 12) eine Drehdurchführung (25) vorgesehen ist

4. Rotorblattenteisungsvorrichtung nach Anspruch 3, **dadurch gekennzeichnet, dass** die Drehachse (46) der Drehdurchführung (25) einer Drehachse (46) des Rotorblatts (5) entspricht.

5. Rotorblattenteisungsvorrichtung nach einem der Ansprüche 1 bis 4, **dadurch gekennzeichnet, dass** der Lüfter (22) eine Rotationsachse aufweist, die parallel zu einer Rotationsachse des Rotors (10) ist.

6. Rotorblattenteisungsvorrichtung nach einem der Ansprüche 2 bis 5, **dadurch gekennzeichnet, dass** der Teil der Rotorblattenteisungsvorrichtung, der ortsfest mit der Nabe (4) verbunden ist, schwingungsentkoppelt oder schwingungsgedämpft mit der Nabe (4) verbunden ist.

7. Rotorblattenteisungsvorrichtung nach einem der Ansprüche 1 bis 6, **dadurch gekennzeichnet, dass** ein im Wesentlichen geschlossenes Luftleitsystem (9) vorgesehen ist.

8. Rotorblattenteisungsvorrichtung nach einem der Ansprüche 1 bis 7, **dadurch gekennzeichnet, dass** auf einer Druckseite des Lüfters (22) eine oder mehrere, insbesondere im Hinblick auf die Größe vorgebbare, Öffnung (23) oder Öffnungen (23), insbesondere zur kontinuierlichen, Abfuhr von Luft aus der Rotorblattenteisungsvorrichtung vorgesehen ist oder sind.

9. Rotorblattenteisungsvorrichtung nach Anspruch 8, **dadurch gekennzeichnet, dass** in einem Saugbereich des Luftleitsystems (9) in einem Rotorblattinnenraum (38) eine Öffnung (28) oder mehrere Öffnungen (28) vorgesehen ist oder sind, um Luft aus dem Rotorblattinnenraum (38) in das Luftleitsystem (9) einzubringen.

10. Rotorblattenteisungsvorrichtung nach Anspruch 9, **dadurch gekennzeichnet, dass** in einem Schott (26) des Rotorblattes (5) eine weitere Öffnung (31) oder mehrere weitere Öffnungen (31) vorgesehen ist oder sind, durch die frische Luft in den Rotorblattinnenraum (38) einbringbar ist.

11. Rotorblattenteisungsvorrichtung nach einem der Ansprüche 1 bis 10, **dadurch gekennzeichnet, dass** ein erster Luftfilter (27) in dem ersten Kanal (11) und/oder ein zweiter Luftfilter (27') in dem zweiten Kanal (12) vorgesehen ist oder sind.

12. Windenergieanlage (1) mit einer Rotorblattenteisungsvorrichtung nach einem der Ansprüche 1 bis 11.

13. Verfahren zum Betreiben einer Rotorblattenteisungsvorrichtung einer Windenergieanlage (1), wobei die Windenergieanlage (1) einen Rotor (10) mit wenigstens einem an einer Nabe (4) angebrachten Rotorblatt (5) aufweist, mit den Schritten: Erwärmen von Luft durch eine Heizvorrichtung und Einleiten der erwärmten Luft mittels eines Lüfters in ein Luftleitsystem (9), wobei das Luftleitsystem (9) einen einen ersten Luftstrom (13) in Richtung einer Rotorblattspitze (45) leitenden ersten Kanal (11) und einen einen zweiten Luftstrom (14) in Richtung der Nabe (4) leitenden zweiten Kanal (12) aufweist, wobei der erste Kanal (11) und der zweite Kanal (12) abschnittsweise koaxial ausgebildet sind.

14. Verfahren nach Anspruch 13, **dadurch gekennzeichnet, dass** der erste Luftstrom (13) erwärmte Luft aufweist und/oder der zweite Luftstrom (14) abgekühlte Luft aufweist.
